# EUROPEAN PATENT APPLICATION

(11) **EP 1 967 956 A1**
(43) Date of publication of application: **10.09.2008**
(21) Application number: 05822416.3
(22) Date of filing: 28.12.2005
(51) Int. Cl.: G06F 13/00, H04L 12/54, H04L 12/58

(54) **INFORMATION PROCESSING DEVICE, INFORMATION PROCESSING METHOD AND PROGRAM**

(71) Applicant: FUJITSU LIMITED, Kawasaki-shi, Kanagawa 211-8588 (JP)
(72) Inventor: ISHII, Kenji, c/o FUJITSU LIMITED, Kawasaki-shi, Kanagawa 211-8588 (JP)
(74) Representative: Kreutzer, Ulrich
(86) International application number: PCT/JP2005/024089
(87) International publication number: WO 2007/077603

(57) **Abstract**

An image processing apparatus includes a reception unit configured to receive a predetermined part of an electronic mail item, and a determination unit configured to determine whether another portion of the electronic mail item should be received based on the predetermined part of the electronic mail item. The predetermined part of the electronic mail item includes information about at least a title, an amount of information, and a transmission date of the electronic mail item. The determination unit determines whether the other portion of the electronic mail item should be received by comparing at least one item of the information about the title, the information amount, and the transmission date with a corresponding determination criterion.

## Description

### TECHNICAL FIELD

The present invention relates to information processing apparatuses, information processing methods, and programs. In particular, the present invention relates to an information processing apparatus having an electronic mail transmit/receive function, an information processing method that is performed using the apparatus, and a program including instructions for causing a computer to carry out the information processing method.

### BACKGROUND ART

Mobile telephones are an example of an information processing apparatus equipped with the electronic mail transmit/receive function for transmitting or receiving electronic mail (which may be simply referred to as "Internet mail") via a network, such as the Internet.

In some of the applications (which may be simply referred to as "Internet mail applications") installed on such mobile telephones to provide functions relating to the transmission and reception of Internet mail, a setting can be made to acquire the header information alone of a particular electronic mail item and not its text body from a mail server if the electronic mail item exceeds a designated size.

For example, Patent Document 1 discloses that whether the text body of an electronic mail item should be acquired is controlled depending on whether the sender of the electronic mail is preset by the recipient.
Patent Document 1: Japanese Laid-Open Patent Application No. 2002-197033
Patent Document 2: Japanese Laid-Open Patent Application No. 2003-163697

### DISCLOSURE OF THE INVENTION

### PROBLEMS TO BE SOLVED BY THE INVENTION

A user, using such an Internet mail application on a mobile telephone, may activate the aforementioned function to receive the header portion alone of electronic mail received at the mail server if the size of a particular incoming electronic mail item exceeds a predetermined size.

In this case, the user who has reviewed the header portion, which may be received using an incoming mail notifying-type reception function or a periodical reception function, may want to read the corresponding text body of the mail item immediately. However, if the user is in a mobile environment where communications are disabled, the user cannot have access to the text body of the particular electronic mail item immediately.

More specifically, when acquiring the header portion alone from the mail server where the incoming electronic mail is stored, the user needs to access the mail server and have the relevant text body transmitted in order to read it. However, if the user is in a communications-disabled mobile environment, the mail server cannot be accessed, and the user cannot view the text body immediately.

The aforementioned "incoming mail notifying-type reception function" is a function whereby a notification may be transmitted to a user's mobile telephone via a short message service (SMS) or a push notification function upon reception of electronic mail at the mail server addressed to the user. The mobile telephone that has received such a notification can receive either the header alone or the header and the text body of electronic mail from the mail server automatically.

The aforementioned "periodical reception function" is a function whereby, regardless of whether there is any incoming electronic mail at the mail server, an operation to receive electronic mail from the mail server is periodically performed at certain time intervals or in accordance with a schedule that a user may set in advance.

When an Internet mail item is acquired including its text body in accordance with the measured rate charging system, the aforementioned function taught in Patent Document 1, i.e., the function whereby the text body is received only for those electronic mail items with predetermined sender mail addresses, may prove effective because communications cost is incurred in proportion to the amount of information that is communicated.

However, the information that a user refers to in identifying an electronic mail item of which the text body the user may want to view is not limited to the sender's mail address, as taught in Patent Document 1, but various other conditions may be relevant.

In view of the aforementioned problems, it is an object of the present invention to provide a system in which various conditions can be set as information that can be used to identify an electronic mail item that the user may wish to view upon reception of electronic mail.

### MEANS OF SOLVING THE PROBLEMS

In one embodiment, a predetermined part of an electronic mail item is received, and whether another portion of the electronic mail item should be received is determined based on the predetermined part of the electronic mail item. The predetermined part of the electronic mail item selectively includes at least one item of information about a title, an amount of information, and a transmission date of the electronic mail item. Whether the other portion of the electronic mail item should be received is determined by comparing at least one item of information selected as desired from the at least one item of information about the title, the amount of information, and the transmission date of the electronic mail item, with a corresponding determination criterion.

In accordance with this embodiment, the predetermined part of the electronic mail item including at least one item of information about a title, an amount of information, and a transmission date of the electronic mail item is initially received. Whether another portion of the electronic mail item should be received is determined by comparing at least one item of information selected as desired from the at least one item of information about the title, the amount of information, and the transmission date of the electronic mail item, with a corresponding determination criterion. Thus, a user can set determination criteria for identifying electronic mail items that he wishes to view including their text body in advance and depending on immediate circumstances.

### EFFECTS OF THE INVENTION

In accordance with the present invention, a user can set determination criteria for identifying electronic mail items that he wishes to view including the text body in advance depending on the immediate circumstance of the user. Thus, the user can set the determination criteria for identifying the minimum required amount of electronic mail that he wishes to view including the text body in advance depending on the immediate circumstance of the user.

Based on such setting, it is possible to automatically receive only the text body of those electronic mail items that satisfy the determination criteria, while avoiding the reception of the text body of other electronic mail items that do not match the criteria. As a result, as far as those electronic mail items are concerned that fall within the minimum required range of the determination criteria set by the user based on his circumstances, the user can view the text body, which is received in a communications-enabled mobile environment. Thus, even when the user happens to be located in a communications-disabled mobile environment when the user desires to view incoming electronic mail, the user can view the electronic mail including their text body portions that are received within the minimum required range in advance.

### BRIEF DESCRIPTION OF THE DRAWINGS

FIG. 1 shows an overall structure of an Internet mail system in which an embodiment of the present invention may be applied;
FIG. 2 shows a software block diagram of a mobile telephone according to an embodiment of the present invention;
FIG. 3 shows a block diagram of a mailer unit of the software block diagram shown in FIG. 2;
FIG. 4A shows a first electronic mail text body reception setting screen created by a function of the mailer of FIG. 3;
FIG. 4B shows a second electronic mail text body reception setting screen created by the function of the mailer of FIG. 3;
FIG. 4C shows an example of electronic mail text body reception settings in accordance with the function of the mailer of FIG. 3;
FIG. 5 shows an operation flowchart illustrating the flow of an electronic mail reception operation in the mobile telephone according to the embodiment of the present invention;
FIG. 6 shows a first operation flowchart of an operation for acquiring a text body on the mobile telephone according to the embodiment of the present invention;
FIG. 7 shows a second operation flowchart of the operation for acquiring a text body on the mobile telephone according to the embodiment of FIG. 8;
FIG. 8 shows first charts for explaining actual examples of the operation shown in FIGs. 6 and 7; and
FIG. 9 shows second charts for explaining actual example of the operation shown in FIGs. 6 and 7.

### EXPLANATION OF REFERENCE NUMERALS

- 15: MAILER
- 15c: SETTING FUNCTION UNIT
- 22: DATA COMMUNICATION UNIT
- 100: MOBILE PHONE
- 500-1: MAIL SERVER

### BEST MODE OF CARRYING OUT THE INVENTION

In accordance with an embodiment, when receiving electronic mail using the incoming mail notifying-type reception function or the periodical reception function, the text body of an electronic mail item is received only when at least one of the following determination criteria is satisfied:
(i) The information amount of the electronic mail item is within a designated size;
(ii) The title includes a predetermined keyword;
(iii) The mail item has a designated importance; and
(iv) The date is within a predetermined range of dates.

In this way, reception of the text body of unwanted electronic mail can be avoided to a great extent, while enabling the immediate viewing of the text body of a necessary electronic mail item.

### Embodiment 1

In the following, a mobile telephone according to an embodiment of the present invention is described with reference to the drawings.

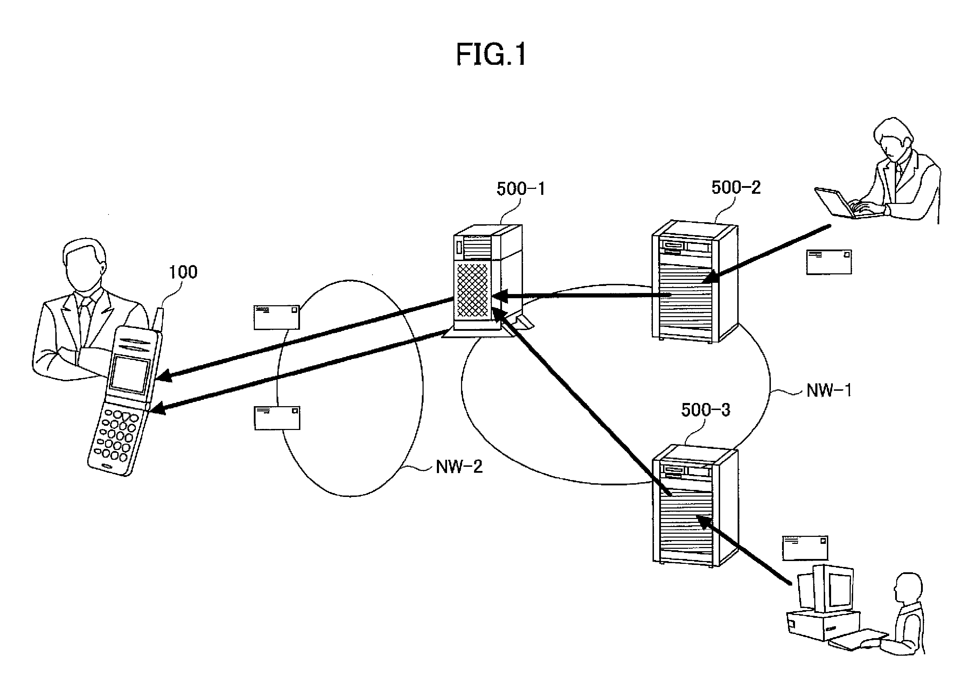

FIG. 1 schematically shows an existing Internet mail system.

In this system, electronic mail transmitted by a mobile telephone or a personal computer, for example, is initially received by a mail server 500-2 allocated to an area to which the transmitting mobile telephone or personal computer belongs. The electronic mail is then transferred via the Internet NW-1 to a mail server 500-1 of a mobile telephone service provider ("carrier") to which the destination address belongs. From the mail server 500-1, the electronic mail is further transferred via a network NW-2 of the mobile telephone service provider to a mobile telephone 100 according to the present embodiment having the destination address.

Thus, in this Internet mail system, the electronic mail that has once reached the mail server 500-1 of the mobile telephone service provider is transferred by the aforementioned incoming mail notifying-type reception or periodical reception function to the mobile telephone 100 of the destination address.

In accordance with the present embodiment, a user of the mobile telephone 100 that has been notified of incoming electronic mail initially receives the header alone of the electronic mail stored in the mail server 500-1 of the mobile telephone service provider. It is then determined whether the text body of a particular electronic mail item should also be received, depending on the header information of the electronic mail item. When it is determined that the text body should be received, the text body is automatically transmitted from the mail server 500-1 and received by the mobile telephone 100.

This process of receiving a notification of incoming electronic mail from the mail server 500-1, receiving the header alone of electronic mail on the mobile telephone 100, determining whether the text body should be received based on the header information, and receiving the text body from the mail server 500-1, is automatically performed by an information processing function of the mobile telephone 100 without a user operation.

Generally, a user of a mobile telephone does not always find himself in a situation which allows a network access from his mobile telephone. For example, when checking newly arriving mail during periods between tasks or when the user is moving, as many users often do, if the phone communications happen to be disabled for one reason or another, the user cannot receive and view the text body immediately even if he wants to in light of the information in the header, which his mobile telephone has automatically received while in an access-allowed situation previously.

In accordance with the present embodiment, as described above, when it is determined that the text body should be received based on the header information that is received automatically by the information processing function of the mobile telephone, the text body is immediately and automatically received from the mail server 500-1. As a result, the user can view the text body of a particular electronic mail item immediately, even in a situation where, for example, the user is moving from one place to another and communications happen to be disabled.

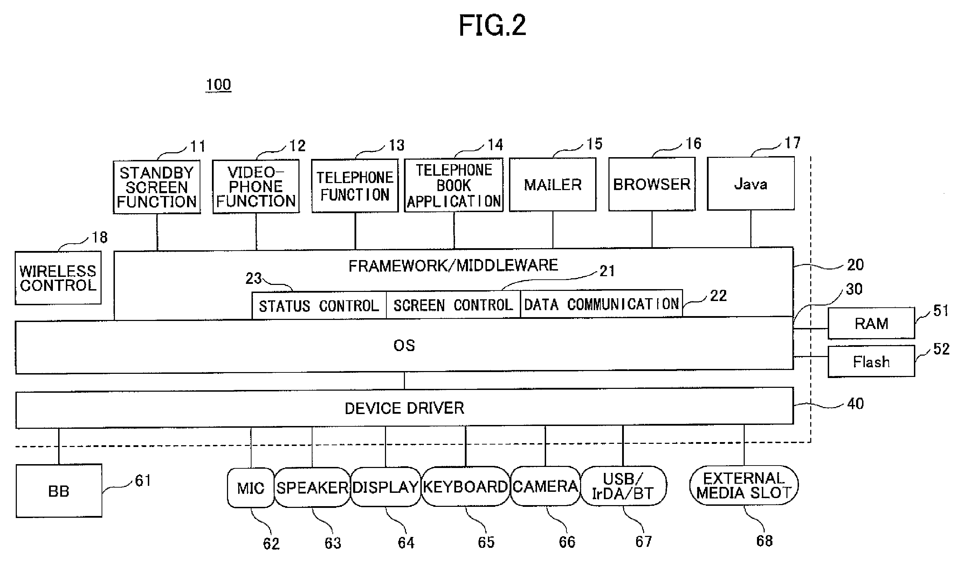

FIG. 2 shows a software block diagram of the mobile telephone 100 according to the present embodiment.

As shown, the software structure of the mobile telephone 100 includes an operating system (OS) on top of which framework/middleware 20 resides. The software structure also includes individual application software items; namely, a type information management function unit 11; a videophone function unit 12; a telephone function unit 13; a telephone book function unit 14; a mailer 15; a browser 16; a Java function unit 17; and a wireless control unit 18. The framework/middleware 20 includes a screen control unit 21, a data communication unit 22, and a status control unit 23.

The mobile telephone 100 also includes hardware items that are controlled by the OS 30 and a device driver 40. The hardware items include a broadband (BB) processing device 61; a microphone 62; a speaker 63; a display 64; a keyboard 65; a camera 66; USB/IrDA/BT standard data connection terminals 67; and an external media slot 68.

The OS also controls writing and reading of data, using a RAM 51 or a flash memory 52 as needed.

The basic software elements of the mobile telephone 100 shown in FIG. 2 may consist of appropriate constituent units of a known mobile telephone, with the exception of the portions particularly described below.

In the mobile telephone 100 having the above-described structure, under the control of the OS 30, a central processing unit (CPU; not shown) implements the functions of the individual application software items 11 through 17, utilizing the basic functions of the framework/middleware 20 including the functions for screen control (21) and data communications (22), and the wireless transmit/receive function of the wireless control unit (18) as needed. As a result, functions of a mobile telephone well known in the art are performed, such as the videophone function (12), the telephone function (13), the telephone book function (14), the electronic mail function (mailer), the Web browser function (16), and the Java function (17). In implementing these functions, the various hardware items 51,52, and 61 through 68 are appropriately utilized.

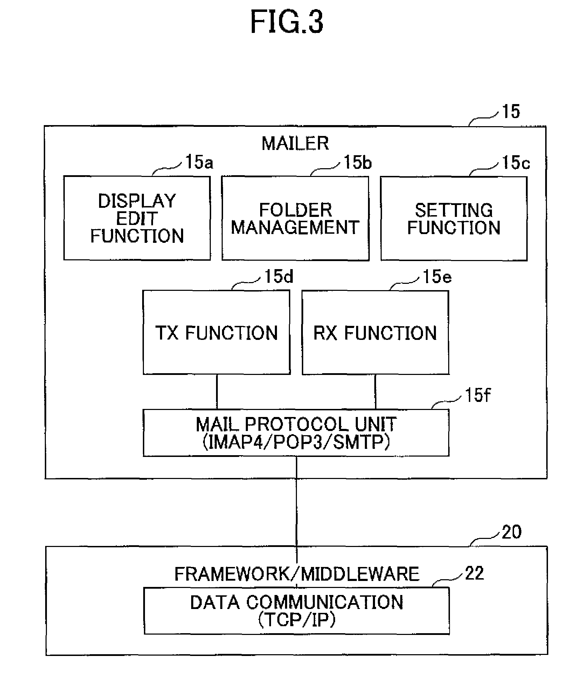

FIG. 3 shows a block diagram of the mailer 15, which performs a function characterizing the present embodiment of the invention.

As shown in FIG. 3, the mailer 15 includes a display/edit function unit 15a; a folder management unit 15b; a setting function unit 15c; a transmission function unit 15d; a reception function unit 15e; and a mail protocol unit 15f. The function of each of these units is described below.

The display/edit function unit 15a provides an electronic mail display function and an electronic mail create/edit function.

The folder management unit 15b provides a function to manage various folders, such as an outgoing folder, an incoming folder, a sent folder, a draft folder, and a user created folder, in a hierarchical structure. The folder management unit 15b also provides a function to enable a user to perform various operations on the folders, such as creation, transfer, name change, or deletion of a folder. The folder management unit 15b further provides functions to display a list of mail items in each folder, delete electronic mail, and move mail items between folders.

The transmission function unit 15d provides a function to send designated electronic mail to the mail server 500-1 (shown in FIG. 1) so that the mail can be transferred to a destination device via the Internet NW-1.

The reception function unit 15e provides a function to access the mail server 500-1 and cause electronic mail stored therein to be transferred to the mobile telephone 100.

The mail protocol unit 15f retains a mail protocol used by the transmission function unit 15d and the reception function 15e. The transmission function unit 15d may use SMTP, while the reception function unit 15e may use POP3 or IMAP4. The mail protocol unit 15f may be included in the middleware 20.

The setting function unit 15c provides a function to manage various settings concerning electronic mail that are made by a user. Specifically, the setting function unit 15c may cause a setting screen to be displayed so that setting information entered by the user can be managed in files.

In the following, a description is given of the aforementioned operation in which the header alone is received when electronic mail is received at the mail server 500-1 from an external unit. This function may be implemented using a function of a known mobile telephone.

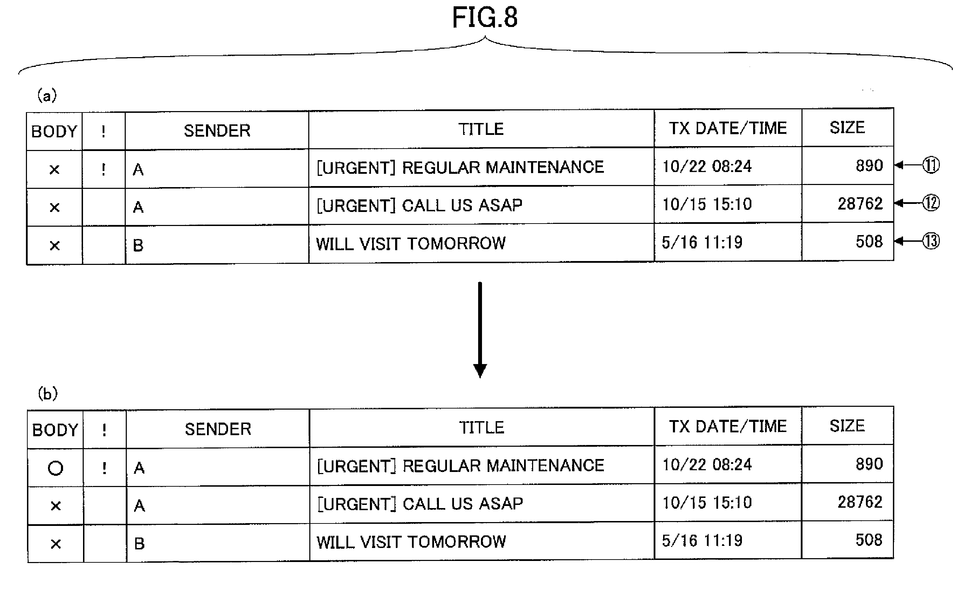

In this case, the folder management unit 15b creates an incoming mail list so that a user can recognize the text body of which electronic mail item remains un-acquired (as described later with reference to FIG. 8). Thus, the user can select an electronic mail item of which the text body has not been acquired, and enter an instruction for receiving the text body. Upon such selection, the reception function unit 15e causes the mail server 500-1 to transmit the text body of the relevant electronic mail item using the mail protocol retained in the mail protocol unit 15f.

The hardware structure of the mobile telephone 100 may be based on the structure of a mobile telephone having an Internet mail transmit/receive function known in the art. Thus, the detailed description of the relevant hardware structure is omitted herein.

In accordance with the present embodiment, the function of the setting function unit 15c to manage various settings includes a function to manage information concerning determination criteria for determining whether the text body should be received depending on the information contained in the header of electronic mail that has arrived at the mail server 500-1.

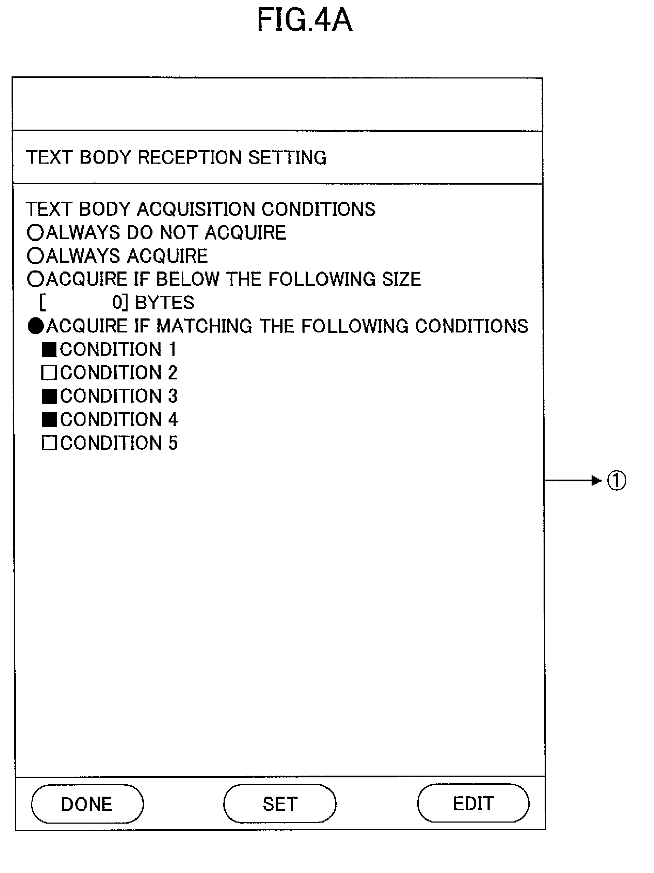

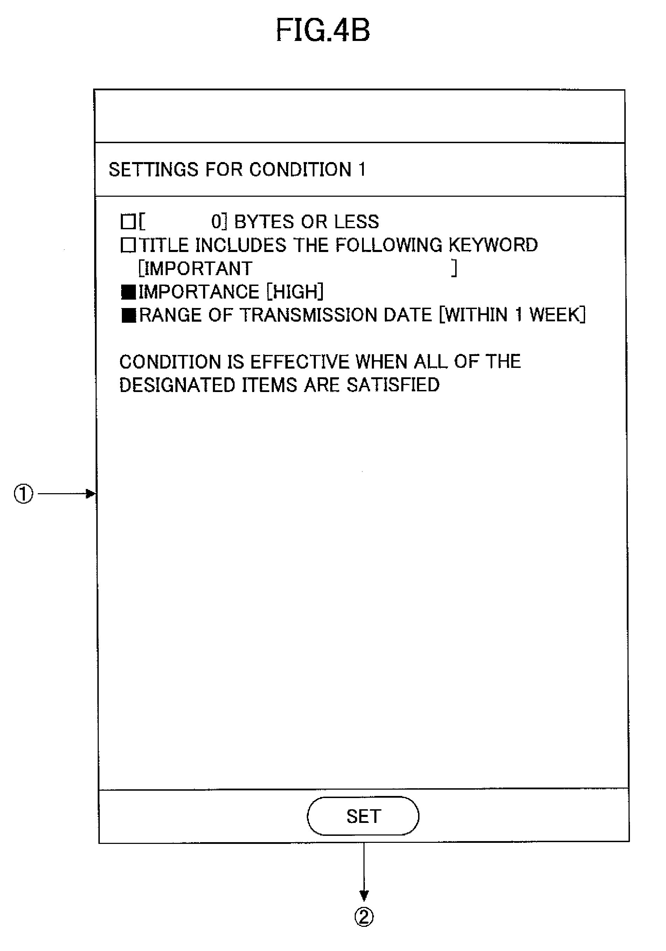

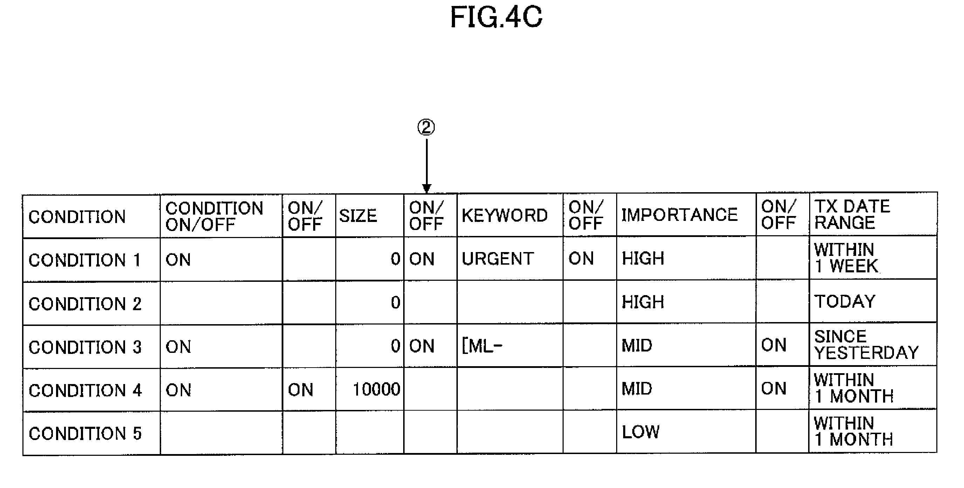

With reference to FIGs. 4A, 4B, and 4C, a description is given of an operation for setting text body reception setting information, which is managed by the setting function unit 15c.

The text body reception setting process involves setting determination criteria for determining whether, as described above, the text body of an incoming mail item should be received based on the information contained in the header of the electronic mail item received at the mail server.

FIG. 4A shows a text body reception setting screen displayed on a display unit of the mobile telephone 100 by the setting function unit 15c.

FIG. 4B shows a determination criteria setting screen that is displayed upon selection of "Condition 1" on the screen shown in FIG. 4A.

FIG. 4C shows an example of text body reception setting information obtained as a result of setting input operations performed by a user on the screens shown in FIGs. 4A and 4B.

In the following, operations associated with the text body reception setting operation are described.

In the text body reception setting process, size, keyword, importance, and date can be designated (see FIG. 4B).

The "size" is a criterion for determining whether the information amount (in bytes) of a particular electronic mail item is greater than a designated size.

The "keyword" is a criterion for determining whether a designated keyword is included in the title of a particular electronic mail item.

The "importance" is a criterion for determining whether a particular electronic mail item has a designated importance.

The "date" refers to a criterion for determining whether the transmission date of a particular electronic mail item is within a designated range of dates.

Thus, a user can select determination criteria in advance for determining whether the text body should be acquired.

These conditions may be activated either individually or in combination with one another.

When more than one of the conditions are set in combination, there may be cases where one condition contradicts another. In such cases, a preferential condition processing may be implemented.

For example, when Condition 1, which may specify rules for acquiring the text body is set in combination with Condition 2, which may specify rules for not acquiring the text body, a setting may be made specifying that "Condition 1 prevails." In this way, one of the conditions can be made preferentially effective over the other when they contradict each other, such as when they both have "Intermediate" importance.

Referring to FIG. 4A, a user can designate the text body reception settings on the screen shown in FIG. 4A with regard to all incoming mail, from among (i) "Always do not acquire (the text body)"; (ii) "Always acquire"; (iii) "Acquire if below the following size"; and (iv) "Acquire if matching the following conditions."

When the setting (iv) is selected, five individual conditions, i.e., Conditions 1 through 5 (see FIG. 4C), can be individually set. When any of such individual conditions that have been set is satisfied, a process is performed to acquire the text body of a relevant electronic mail item.

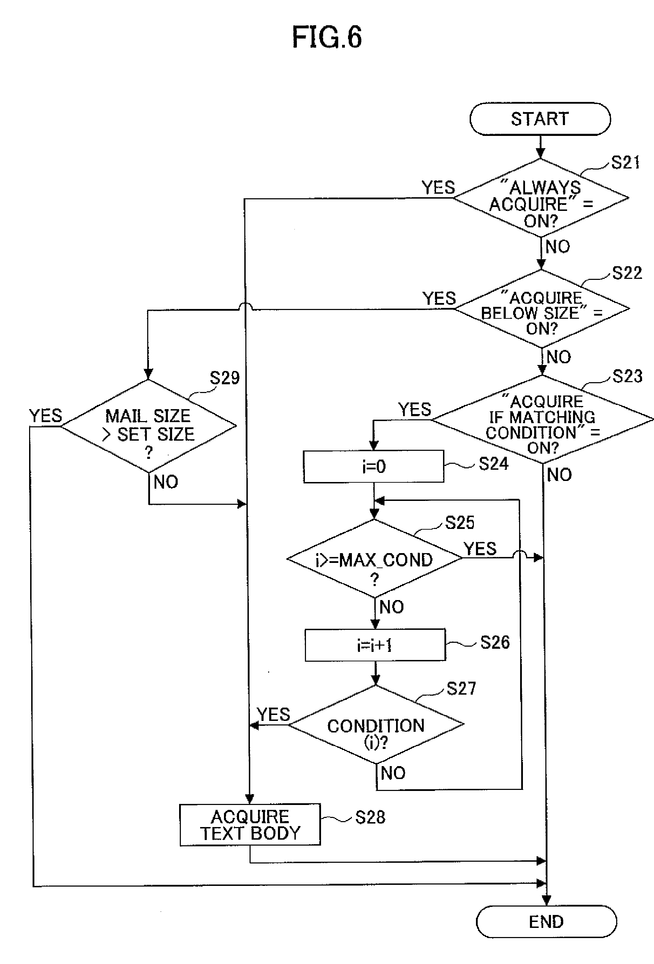

When these five individual conditions are set, one or more of them may be selected as actually activated. In this case, the conditions that are not selected as activated are disregarded during a text body reception determination operation, which is described later with reference to FIG. 6.

In the case of FIGs. 4A and 4C, all five of the above conditions are set, and among them, Conditions 1, 3, and 4 are activated. The other two conditions, namely Conditions 2 and 5, are disregarded.

FIG. 4B shows a setting screen for setting the content of Condition 1.

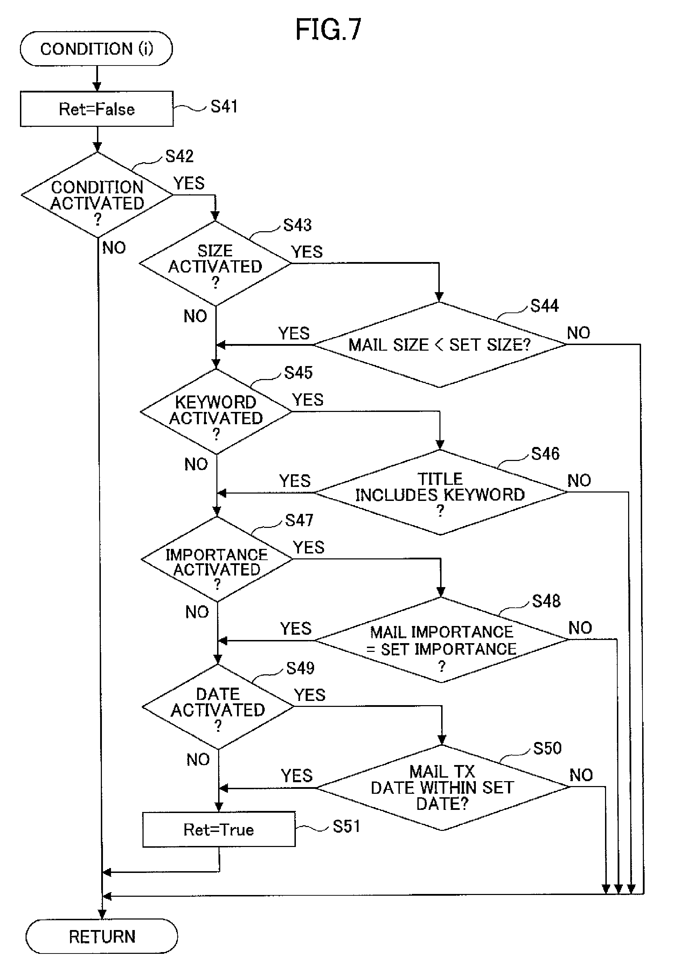

On this screen, the user may designate mail size, title keyword, importance, and/or transmission date as individual items of Condition 1 that the user wishes to activate. In this way, during the individual condition determination operation, as will be described later with reference to FIG. 7, a decision to receive the text body is made if all of the activated condition items are satisfied.

FIG. 4C shows an example of the settings concerning the aforementioned five conditions made via operations entered by the user.

In FIG. 4C, the "Condition on/off" column indicates whether a particular condition is activated ("On") or deactivated ("Off").

The other "On/off" columns indicate whether each item of an individual condition, such as "Size," is activated or deactivated.

The "Size," "Keyword," "Importance," and "Transmission date range" columns indicate the individual setting values.

The setting values may be as follows:
Size: 0 to 100000 bytes (No size determination is made when the size designation is zero, which indicates that any size satisfies the determination criterion)
Keyword: Certain word or sequence of symbols
Importance: High, Mid, or Low
Transmission date range: Today, Since yesterday, Within 1 week, or Within 1 month

The "Keyword" designation in the present example relates to the determination as to whether a designated keyword is included. However, this is merely an example and more complicated keyword settings may be made, such as a prefix search or a suffix search using a character string designating a wild card.

Additionally, other designations may be set, such as a secrecy level designation (Standard, Private, Confidential, Internal, etc.), a reception date designation, and a message number-of-lines designation.

Furthermore, the above conditions may be combined with the sender condition taught in Patent Document 1.

The five conditions shown in FIGs. 4A and 4C are applied on an OR condition basis; namely, a decision to receive the text body is made if any one of the five conditions is satisfied (see FIG. 6).

On the other hand, in regards to the individual determination criteria of each of the predetermined conditions, such as shown in FIGs. 4B and 4C, the determination is made on an AND condition basis; namely, a decision to receive the text body is made only when all of the criteria, i.e., size, keyword, importance, and transmission date that are activated are satisfied (see FIG. 7).

In order to transition from the screen of FIG. 4A to that of FIG. 4B and set the individual determination criteria included in each of the five predetermined conditions, the user presses an "Edit" button at the lower right corner of the screen of FIG. 4A while a desired individual condition (such as "Condition 1" in the case of FIG. 4B) is selected.

In the case of the setting example shown in FIG. 4C, the details of the individual condition settings are as follows:
Condition 1: Receive the text body of electronic mail if the title includes a character string "Urgent" and its importance is "High."
   In this case, because designation items other than "Keyword" and "Importance" have their "On/off" columns left blank and thus not activated, they are disregarded. The same applies in the following.
Condition 3: Receive the text body of electronic mail if the title includes a character string "[ML-" and the transmission date falls within the period "Since yesterday."
Condition 4: Receive the text body of electronic mail if the size is "10000 bytes" or less and the transmission date falls within the period "Within one month."

When any of the above determination criteria has the same content as that of an existing mail sorting function, the above-described function for determining whether the text body should be received or not may be included in the sorting function.

Preferably, a function is further provided to allow the user to cause, through a manual operation, the mail server 500-1 to transmit the text body of electronic mail that remains un-acquired by the mobile telephone 100 due to a decision not to receive the text body based on the text body reception setting.

In the foregoing embodiment, the title in the header of an electronic mail item is searched for a keyword, and a criterion is satisfied if a designated keyword is found. In another embodiment, the entire text body of an electronic mail item may be acquired only when a designated keyword is included in a part of the text body of the electronic mail item.

In order to allow for such settings, not just the header of electronic mail but also a predetermined part of electronic mail including some of the text body (such as an initial 10 lines portion thereof) may be received during the text body reception determination. If the designated keyword is included in such a part of the received text body, the remaining portions are received. In accordance with the aforementioned Internet mail protocol POP3, a designated number-of-lines portion can be received using a "TOP" command.

Generally, an Internet mail application deletes an electronic mail item on the server end when its entire text body has been acquired from the server. Alternatively, when a setting can be made regarding such deletion of mail, a user may make a setting concerning whether or not such electronic mail should be deleted.

In accordance with the present embodiment, it may be determined that the text body need not be received, or portions other than a certain part of the text body need not be received, based on the text body reception setting. Thus, it is preferable to allow the user to make a separate setting concerning whether a particular electronic mail item should be automatically deleted as unwanted mail at the mail server 500-1, or, instead of such automatic deletion, such an electronic mail item should be deleted only in response to an instruction to do so from the user.

Also preferably, when it is determined that the text body need not be received or portions other than a certain portion of the text body need not be received, the user may be enabled to make a separate setting concerning whether the relevant electronic mail item should be deleted from the incoming mail list, which is created by the function of the folder management unit 15b, as mentioned above. For example, as regards an electronic mail item that is determined to be unsolicited mail, the user may be allowed to make a setting such that such electronic mail is automatically deleted from the incoming mail list.

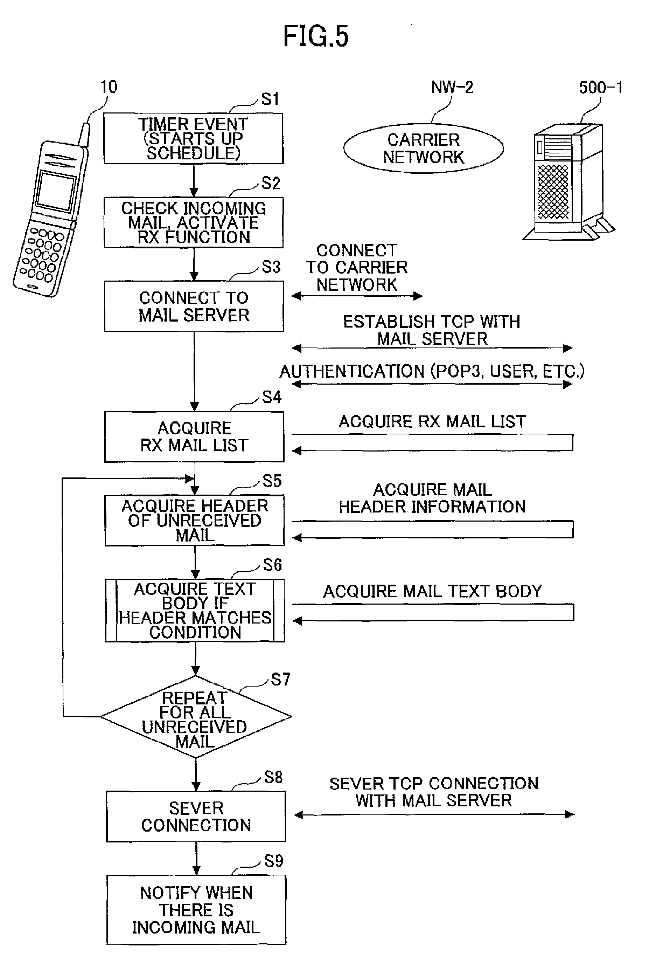

With reference to FIG. 5, a description is given of an operation for causing the mail server 500-1 to transmit electronic mail to the mobile telephone 100.

As mentioned above, there are two methods for receiving electronic mail using an Internet mail application. One is the incoming mail notifying-type, in which mail acquisition is triggered by a notification from the server 500-1 indicating newly arriving mail. The other is the periodical reception type, in which mail acquisition is triggered at designated periods or times.

The sequence shown in FIG. 5 is that of the periodical reception type in which mail acquisition is triggered by a timer event (which occurs periodically at designated times). In this example, the header of electronic mail received during the sequence (in step S5: "Acquire mail header information") is checked to see if it matches any of the aforementioned predetermined conditions.

Referring to FIG. 5, such a timer event takes place in step S1. In step S2, the newly arriving mail confirmation/reception function is activated.

In step S3, the mobile telephone 100 is connected to the mail server 500-1. Specifically, as shown, access to the mail server 500-1 is allowed via TCP establishment and authentication processes (using POP3, USER, etc.).

In step S4, the mobile telephone 100 receives the incoming mail list from the mail server 500-1. In step S5, the header alone of each incoming mail item in the mail server 500-1 is received.

In step S6, the determination is made as to whether the text body of each electronic mail item contained in the incoming mail list should be received (as will be described later with reference to FIGs. 6 and 7), based on the aforementioned text body reception setting. If it is determined that the text body of a particular electronic mail item should be received, the text body is received from the mail server 500-1.

In step S7, the above operations of steps S5 and S6 are repeated for each of the electronic mail items in the incoming mail list received from the mail server 500-1.

Thereafter, the connection established with the mail server 500-1 in step S3 is severed (step S8). In step S9, a notification about newly arriving mail is sent to the user as needed. Namely, when incoming mail is actually included in the incoming mail list acquired in step S4, an incoming mail indicating operation (such as emitting a ring tone, lighting a light-emitting diode (LED), or vibrating the phone) is performed to notify the user of the mobile telephone 100.

These operations shown in FIG. 5 are implemented by some of the functions of the mailer 15, including the folder management unit 15b, the setting function unit 15c, the reception function unit 15e, and the mail protocol unit 15f, as well as the data communication unit 22 shown in FIG. 3.

In the following, the operation to determine whether the text body should be received based on the text body reception setting is described with reference to FIGs. 6 and 7. This operation, which is carried out in step S6 of the above-described process shown in FIG. 5, is implemented mainly by the setting function unit 15c of the mailer 15 shown in FIG. 3.

Referring to FIG. 6, it is determined in step S21 whether the condition for always not acquiring the text body or the condition for always acquiring the text body, as shown in FIG. 4A, is set. If it is determined that the condition for always acquiring the text body is set ("ON"), the routine proceeds to step S28, where a decision is made that the text body of every electronic mail item should be received unconditionally. In this case, the operation to receive the text body of the relevant electronic mail item from the mail server 500-1, corresponding to step S6 of FIG. 5, is performed.

On the other hand, if neither the condition for always acquiring the text body or the condition for always not acquiring the text body, as shown in FIG. 4A, is set, it is determined in step S22 whether the condition for acquiring the text body when below a certain size is set. Specifically, it is determined whether the condition "Acquire if below the following size" shown in FIG. 4A is set and activated.

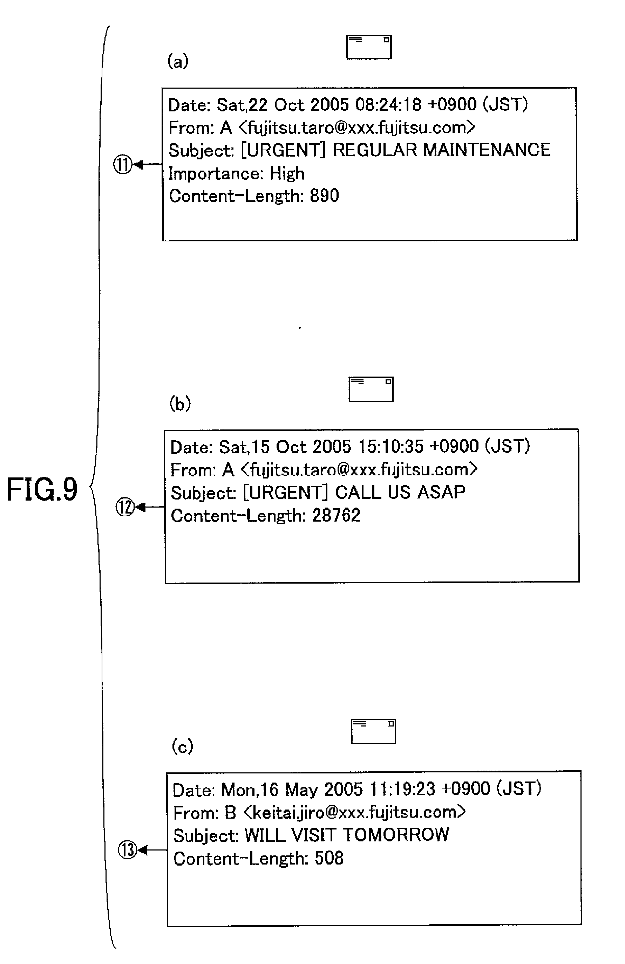

If this setting is activated, a size value is acquired from the size information (see FIG. 9: "Content-Length") in step S29 that is contained in the header of the particular electronic mail item received from the mail server 500-1 in step S5 of FIG. 5. The size value is then compared with a set value. If the result of comparison indicates that the size value does not exceed the set value, the routine proceeds to step S28, where the decision that the text body needs to be received is made.

If the condition "Acquire if below the following size" is not activated, it is determined in step S23 whether the condition "Acquire if matching the following conditions" shown in FIG. 4A is activated. If "No," the process ends.

On the other hand, if the result of step S23 indicates "On" (activated), the routine proceeds to step S24 where the variable "i" indicating the condition item number is initialized to zero. In step S25, it is determined whether the variable i has the maximum value. If not, the variable i is incremented by one (step S26). Then, the determination process is performed in step S27, which corresponds to FIG. 7 as described below, using the individual condition corresponding to the variable i.

If the determination indicates that the text body needs to be received, the decision is made that the text body needs to be received in step S28. On the other hand, if the determination in step S27 indicates that the text body need not be received, the operations in steps S25 to S27 are repeated until the result with regard to each individual condition indicates that the text body needs to be received. If the result for every one of the individual conditions indicates that the text body need not be received, the result of step S25 is "Yes," whereupon the process ends.

In the following, the process in step S27 with regard to the individual condition is described with reference to FIG. 7.

In this process, it is determined whether the set values of each predetermined condition, as shown in FIG. 4C, for example, satisfy the activated determination criteria, successively from one setting value to another.

In step S41, a variable Ret, which indicates whether a particular electronic mail item eventually satisfies the determination criteria concerning the reception of the text body, is initialized to "False."

In step S42, it is determined whether the application of an individual condition, i.e., Condition i (such as Condition 1 shown in FIG. 4C) is activated. Specifically, in the example of FIG. 4C, it is determined whether an "On" setting is entered in the "Condition on/off" column. If not activated ("Off"), the routine of FIG. 7 ends and the process returns from step S27 to step S25 of FIG. 6. Unless all of the individual conditions have been processed, the condition variable i is incremented in step S26 and the next individual condition is processed.

On the other hand, if the result of step S42 is "Yes," it is determined in step S43 whether the "Size" designation is activated. In the example of FIG. 4C, it is determined whether "On" is noted in the "On/off" column immediately to the left of the "Size" column. If "On" ("activated"), the size value of a particular electronic mail item is obtained in step S44 from the header received from the mail server 500-1 in step S5 of FIG. 5, and compared with a designated value.

If the result of comparison indicates a size below the designated size, the routine proceeds to step S45. If the result of step S43 is negative (i.e., the size designation is not activated), the routine also proceeds to step S45. On the other hand, if the result of step S44 indicates that the size exceeds the designated size, the process ends and the routine returns from step S27 to step S25 of FIG. 6. Unless all of the individual conditions have been processed, the condition variable i is incremented in step S26, and the next individual condition is processed.

In step S45, it is determined whether the "Keyword" designation is activated. In the example of FIG. 4C, it is determined whether "On" is set in the "On/off" column immediately to the left of the "Keyword" column. If activated ("On"), it is determined in step S46 whether, based on the content of the header received from the mail server 500-1 in step S5 of FIG. 5, a designated keyword is included in the title of the electronic mail item.

If the result of determination indicates that the designated keyword is included, the routine proceeds to step S47. If the result of step S45 is "No" (i.e., the keyword designation is not activated), the routine also proceeds to step S47. If it is determined that the designated keyword is not included in step S46, the process ends and, as in the above case, the routine returns from step S27 to step S25 of FIG. 6. Unless all of the individual conditions have been processed, the condition variable i is incremented in step S26, and the next individual condition is processed.

In step S47, it is determined whether the "Importance" designation is activated. In the example of FIG. 4C, it is determined whether "On" is set in the "On/off" column immediately to the left of the "Importance" column. If activated ("On"), it is determined in step S48 whether, based on the content of the header received from the mail server 500-1 in step S5 of FIG. 5, the importance of the particular electronic mail item is equal to or above the designated importance.

If the result of determination indicates that the importance is equal to or above the designated importance, the routine proceeds to step S49. If the result of step S47 is "No" (i.e., the importance designation is not activated), the routine also proceeds to step S49. If the result of step S48 indicates that the importance is less than the designated importance, the process ends and the routine returns from step S27 to step S25 of FIG. 6, as in the above case. Unless all of the individual conditions have been processed, the condition variable i is incremented in step S26, and the next individual condition is processed.

In step S49, it is determined whether the "Date" designation is activated. In the example of FIG. 4C, it is determined whether "On" is set in the "On/off" column immediately to the left of the "Date" column. If the result indicates the designation is activated, it is determined in step S50 whether, based on the content of the header received from the mail server 500-1 in step S5 of FIG. 5, the transmission date of the particular electronic mail item is within the designated period.

If the result of determination indicates that the date is within the designated range, the routine proceeds to step S51. If the result of step S49 is "No" (i.e., the date designation is not activated), the routine also proceeds to step S51. If the result of step S50 indicates that the date is not within the designated range, the process ends and, as in the above case, the routine returns from step S27 to step S25 of FIG. 6. Unless all of the individual conditions have been processed, the condition variable i is incremented in step S26, and the next individual condition is processed.

Thus, it is determined whether each determination criterion is satisfied regarding the "Size" designation in steps S43 and S44, the "Keyword" designation in steps S45 and S46, the "Importance" designation in steps S47 and S48, and the "Transmission date" designation in steps S49 and S50. If all of the activated determination criteria are satisfied, the variable Ret, which indicates whether the particular individual condition is satisfied, is set to "True" in step S51. As a result, the result of step S27 of FIG. 6 becomes "Yes," and the routine proceeds to step S28 where a decision is made that the text body of the particular electronic mail item needs to be received.

In the following, reference is made to FIGs. 8 and 9 to describe an example of the operation of FIGs. 6 and 7 to determine whether the text body should be received in a case where there are three incoming electronic mail items at the mail server 500-1 as shown in FIG. 8(a).

FIG. 8 shows incoming mail lists created by the function of the folder management unit 15b of the mailer 15 shown in FIG. 3, based on the header information of electronic mail that has been received from the mail server 500-1 in step S5 of FIG. 5.

In FIG. 8, the "Body" column on the left indicates the text body reception status, i.e., whether the text body of a particular electronic mail item has been received from the mail server 500-1. When a circle is entered in the column, this shows that the text body is received. When a cross mark is entered, this shows that the text body is not received.

The "!" column to the right of the "Body" column indicates the "Importance" setting. When the exclamation mark is entered in this column, it shows that the particular electronic mail item has a "High" importance.

With regard to each of the electronic mail shown in FIG. 8, whether the activated conditions 1, 3, and 4 of the five individual Conditions 1 to 5 are satisfied is determined as follows.

With regard to Condition 1 shown in FIG. 4C, because the text body needs to be received if the title of a relevant electronic mail item includes a character string "Urgent" and the mail has a "High" importance, it can be seen that the first electronic mail item (at the top) satisfies this individual condition. Thus, in the flow of FIG. 7, step S42 is "Yes," S43 is "No," S45 is "Yes," S46 is "Yes," S47 is "Yes," S48 is "Yes," and S49 is "No." As a result, step S27 of FIG. 6 is "Yes," so that, via step S28, the text body of the first electronic mail item is received in step S6 of FIG. 5.

In the case of the first electronic mail item, because its size is 890 bytes, which is smaller than the designated size of 10000 bytes, and its transmission date (Oct. 22, 2005) is within one month of today (Oct. 24, 2005), the mail item satisfies Condition 4 as well. However, in the flow of FIG. 6, the determination is made in increasing order of the condition numbers, and the decision is "Yes" in step S27 when the result of determination indicates that the text body needs to be received, whereupon the process of FIG. 6 ends via step S28. Thus, actually no determination is made as regards Condition 4, and the reception of the text body is determined upon Condition 1, which number comes earlier than Condition 4, being satisfied.

With regard to the second electronic mail item (second from top) shown in FIG. 8, although the "Keyword" determination criterion of Condition 1 for the word "Urgent" is satisfied ("Yes" in step S46 of FIG. 7), the "Importance" setting is not "High" ("No" in step S48 of FIG. 7). Thus, the second electronic mail item does not satisfy Condition 1. With regard to Condition 3, because the designated keyword "[ML-" is not included in the title ("No" in step S46 of FIG. 7), the second electronic mail item does not satisfy Condition 3 either. As to Condition 4, because the size "28762 bytes" of the electronic mail item exceeds the designated size "10000 bytes" of the condition ("No" in step S44 of FIG. 7), the second electronic mail item also fails to satisfy Condition 4. Consequently, the second electronic mail item does not satisfy any of the activated individual conditions, i.e., Conditions 1, 3, and 4. Thus, the text body of the second electronic mail item is not automatically received.

With regard to the third electronic mail item (at the bottom) shown in FIG. 8, Condition 1 is not satisfied because the designated keyword "Urgent" is not included in the title. As to Condition 3, too, the designated keyword "[ML-" is not included in the title, thus failing to satisfy this condition. Regarding Condition 4, although the criterion for the designated size is satisfied ("Yes" in step S44 of FIG. 7), its transmission date is May 16, 2005, which is before the one month period of the transmission date designation of "Within one month" ("No" in step S50 of FIG. 7). As a result, the third electronic mail item does not satisfy any of the activated individual conditions, i.e., Conditions 1, 3, or 4. Therefore, the text body of the third electronic mail item is not automatically received.

Thus, as shown in FIG. 8(b), the text body of the first electronic mail item alone is received, and the text bodies of the second and the third electronic mail items are not received.

Thus, in accordance with the present embodiment, multiple conditions can be set, and whether the text body should be received or not can be determined based on whether any one of the conditions is satisfied. Each of such multiple individual conditions may include multiple determination criteria, so that a particular individual condition is considered satisfied only when all of its multiple determination criteria are satisfied. Thus, when the user, in view of the content of electronic mail that he expects to receive in the future, categorizes incoming mail into plural groups based on different aspects, the user can set the above individual conditions for each of such groups that he wishes to receive.

The conditions for identifying electronic mail that the user wishes to receive may vary depending on the immediate individual circumstances of the user. In accordance with the present embodiment, plural different identifying conditions that can be expected (such as Conditions 1 to 5 in the example of FIG. 4C) can be set, and the user can select more than one of the individual conditions that are actually employed, depending on a change in circumstances.

Thus, the user can set the identifying conditions for electronic mail that he wishes to receive flexibly, in accordance with his own circumstances and on an individual element basis.

In accordance with the present embodiment of the invention, it is possible in a mobile environment involving a mobile telephone, for example, to receive only the header of unwanted electronic mail and the text body of necessary electronic mail. The user can therefore view the text body of necessary electronic mail immediately even in a communications-disabled environment.

### INDUSTRIAL APPLICABILITY

While the foregoing embodiment has been described with reference to a mobile telephone, the present invention is not limited to such an embodiment. The present invention may be applied to information processing apparatuses in general that are equipped with an electronic mail transmit/receive function. For example, the present invention may be similarly applied to a personal computer that can be connected to the Internet.

In another embodiment, the present invention may be realized in the form of a program or a computer-readable recording medium. For example, a program may be created that includes instructions for causing a computer to execute the operations described above with reference to FIGs. 4A through 9. Such a program may be stored in a flash memory 51 or a RAM 52 shown in FIG. 2. A CPU (not shown) in the mobile telephone 100 may be then caused to execute the instructions contained in the program, whereby the operations described with reference to FIGs. 4A through 9 can be executed on the mobile telephone 100.

In this case, it is also possible to store the program in a portable computer-readable recording medium, such as a card-type recording medium well known in the art. Such a card may be then inserted into the mobile telephone 100, so that the program can be installed and executed by the CPU in the mobile telephone 100.

## Claims

1. An information processing apparatus comprising:
a reception unit configured to receive a predetermined part of an electronic mail item; and
a determination unit configured to determine whether another portion of the electronic mail item should be received based on the predetermined part of the received electronic mail item;
wherein the predetermined part of the electronic mail item includes information about at least a title, an amount of information, and a transmission date of the electronic mail item, and
wherein the determination unit determines whether the other portion of the electronic mail item should be received by comparing at least one of the title, the amount of information, and the transmission date with a corresponding determination criterion.

2. The information processing apparatus according to claim 1, wherein the determination unit uses a set of one or more determination criteria as a determination condition, wherein plural of the determination conditions can be set, and
wherein the determination unit determines whether the other portion of the electronic mail item should be received based on whether any one of the plural determination conditions is satisfied,
wherein each of the determination conditions is satisfied when all of the one or more determination criteria contained in each of the determination conditions are satisfied.

3. The information processing apparatus according to claim 1, wherein the predetermined part of the electronic mail item comprises either a header or a header and a predetermined portion of a text body.

4. The information processing apparatus according to claim 1, further comprising a delete instructing unit configured to instruct a mail server in which information about the electronic mail item is stored to delete the information about the electronic mail item from the mail server when the determination unit determines that the other portion of the electronic mail item should not be received.

5. The image processing apparatus according to claim 1, further comprising an item deleting unit configured to delete an item associated with the electronic mail item from electronic mail list information when the determination unit determines that the other portion of the electronic mail item should not be received.

6. An information processing method comprising:
a receiving step of receiving a predetermined part of an electronic mail item; and
a determining step of determining whether another portion of the electronic mail item should be received based on the predetermined part of the electronic mail item received;
wherein the predetermined part of the electronic mail item includes information about at least a title, an amount of information, and a transmission date of the electronic mail item, and
wherein the determining step determines whether the other portion of the electronic mail item should be received by comparing at least one item of the information about the title, the amount of information, and the transmission date with a corresponding determination criterion.

7. The information processing method according to claim 6, wherein a set of one or more determination criteria is set as a determination condition in the determining step, wherein plural of the determination conditions can be set, and
wherein the determining step determines whether the other portion of the electronic mail item should be received based on whether any one of the plural determination conditions is satisfied,
wherein each of the determination conditions is satisfied when all of the one or more of the determination criteria contained in each of the determination conditions are satisfied.

8. The information processing method according to claim 6, wherein the predetermined part of the electronic mail item comprises either a header or a header and a predetermined portion of a text body.

9. The information processing method according to claim 6, including a delete instructing step of instructing a mail server in which information about the electronic mail item is stored to delete the information about the electronic mail item from the mail server when it is determined in the determining step that the other portion of the electronic mail item should not be received.

10. The information processing method according to claim 6, including an item deleting step of deleting an item associated with the electronic mail item from electronic mail list information when it is determined in the determining step that the other portion of the electronic mail item should not be received.

11. A program comprising instructions for causing a computer to carry out:
a receiving step of receiving a predetermined part of an electronic mail item using a predetermined communications unit; and
a determining step of determining whether another portion of the electronic mail item should be received based on the predetermined part of the electronic mail item received;
wherein the predetermined part of the electronic mail item includes information about at least a title, an amount of information, and a transmission date of the electronic mail item, and
wherein the determining step determines whether the other portion of the electronic mail item should be received by comparing at least one item of the information about the title, the amount of information, and the transmission date with a corresponding determination criterion.

12. The program according to claim 11,
wherein a set of one or more determination criteria is used as a determination condition in the determining step, wherein plural of the determination conditions can be set, and
wherein whether the other portion of the electronic mail item should be received is determined based on whether any one of the plural determination conditions is satisfied,
wherein each of the determination conditions is satisfied when all of the one or more determination criteria contained each of the determination conditions are satisfied.

13. The program according to claim 11,
wherein the predetermined part of the electronic mail includes either a header or a header and a predetermined portion of a text body.

14. The program according to claim 11, including an instruction for causing the computer to carry out a deletion instructing step of instructing a mail server in which information about the electronic mail item is stored to delete the information about the electronic mail item from the mail server when it is determined in the determining step that the other portion of the electronic mail item should not be received.

15. The program according to claim 11, including an instruction for causing the computer to carry out an item deleting step of deleting an item associated with the electronic mail item from electronic mail list information when it is determined in the determining step that the other portion of the electronic mail item should not be received.
